# EUROPEAN PATENT SPECIFICATION

(11) **EP 0 348 030 B1**
(45) Date of publication and mention of the grant of the patent: **10.04.1996**
(21) Application number: 89304658.1
(22) Date of filing: 09.05.1989
(51) Int. Cl.: G06F 15/78

(54) **Computing sequence result availability**
Ergebnisverfügbarkeit einer Rechensequenz
Disponibilité des résultats d'une séquence de calcul

(30) Priority: 23.06.1988 US 211387
(43) Date of publication of application: 27.12.1989
(73) Proprietor: International Business Machines Corporation, Armonk, N.Y. 10504 (US)
(72) Inventor: Misra, Mamata, Austin Texas 78731 (US); Urquhart, Robert John, Austin Texas 78750 (US); Vanover, Michael Terrell, Austin Texas 78758 (US); Voltin, John Alvin, Austin Texas 78729 (US)
(74) Representative: Bailey, Geoffrey Alan

(56) References cited:
- EP-A- 0 061 586
- EP-A- 0 169 030
- EP-A- 0 205 809
- US-A- 4 128 880
- US-A- 4 525 796
- IBM TECHNICAL DISCLOSURE BULLETIN. vol. 26, no. 2, July 1983, NEW YORK US pages 511 - 514 AGERWALA AND KARP 'Register renaming for vector processors'

## Description

The present invention relates to computing sequence result availability in processing systems such as floating point arithmetic apparatus that concurrently provides input/output operations during floating point computations to alleviate the large local storage problem otherwise perceived.

Traditionally, computers perform integer arithmetic. That is, computers perform addition and subtraction of binary integers represented as bits (binary digits). Floating point arithmetic is also performed by computers. Floating point arithmetic parameters include both a mantissa and an exponent. The procedures for performing floating point arithmetic are different and more complex than the procedures for performing integer arithmetic. Due to this complexity, many computers include special purpose hardware to perform floating point arithmetic operations. This hardware is commonly referred to as a floating point unit which is provided separately from the central processing unit (CPU).

In the IBM RT PC workstation, a floating point unit is connected via a bus to the CPU. The CPU, in executing floating point instructions, sends commands over the bus to the floating point unit (FPU) to perform these commands and continues the execution of instructions internally in the CPU while the FPU performs its arithmetic operations.

In scientific and engineering applications, floating point vector arithmetic is important. Therefore, there is a requirement that the FPU have the capability to efficiently perform vector floating point arithmetic. EP 0,169,030 describes a data processing circuit for calculating either a total sum or a total product of a plurality of vector data. An arithmetic unit successively performs sums to produce intermediate results which are stored in registers. These intermediate results are passed back through the arithmetic unit in a pipeline fashion to produce an ultimate result which represents for example the total sum.

Traditionally, vector processes have been characterised by larger amounts of local memory in which large vector bases of data are stored allowing the vector processor to perform operations without having to interface to a system processor. In this configuration, the bus latency between the system processor and the vector processor is not critical since the ratio of vector processing execution to vector input-output (I/O) time is high.

However, large local memory can be expensive. The present invention attempts to provide a different approach to solve this dilemma by providing the capability to execute arithmetic operations concurrently with I/O operations.

The present invention provides a data processing system and a method as defined in the independent claims 1 and 7, respectively Futher, embodiments of the invention are specified in the appended dependent claims.

As disclosed hereinafter by way of example, the computation results of operation sequences are placed in registers. The registers also contain the parameters for the next sequence of operations. The registers are assigned to store either a result or a parameter and the register assignment is maintained throughout the series computations. The computation of operation sequence results is performed on vector arithmetic applications. The vector arithmetic applications are executed in a pipeline fashion. The actual vector arithmetic includes multiplication and addition operations. While these operations are being performed, the registers, which store the results of previous operations are read. Also, during the performance of the current arithmetic operation, the operands for the next arithmetic operations are being provided to these registers. Since several arithmetic operations are being performed in a pipeline fashion and concurrently with each of these pipeline operations, input/output operations are being performed, the speed at which the arithmetic operations and input/output operations are performed is greatly increased.

The present invention will be described further by way of example with reference to embodiments thereof as well as to examples of the prior art to provide contrast, and as illustrated in the accompanying drawings, in which:-
Figure 1A is a software flow diagram illustrating a prior art non-vector arithmetic computation;
Figure 1B illustrates the computer instructions to perform the arithmetic operation of Figure 1A;
Figure 2 is a timing block diagram illustrating the prior art operation of a computer performing the arithmetic operation illustrated in Figure 1A;
Fig 3 is a block diagram of one form of floating point unit of the present invention connected to a system processor;
Figure 4 is a timing block diagram illustrating the concurrent operation of the floating point unit;
Figure 5A is software flow diagram illustrating the vector concurrent arithmetic operations;
Figure 5B illustrates the computer instructions for performing the procedures in Figure 5A;
Figure 6 is a diagram illustrating the registers during the performance of the operations illustrated in Figure 5A;
Figures 7A and 7B are timing diagrams illustrating the performance of concurrent operations and the occurrence of an interlock; and
Figure 8 is a timing diagram for the floating point unit illustrating the concurrent read, add and multiply operations.

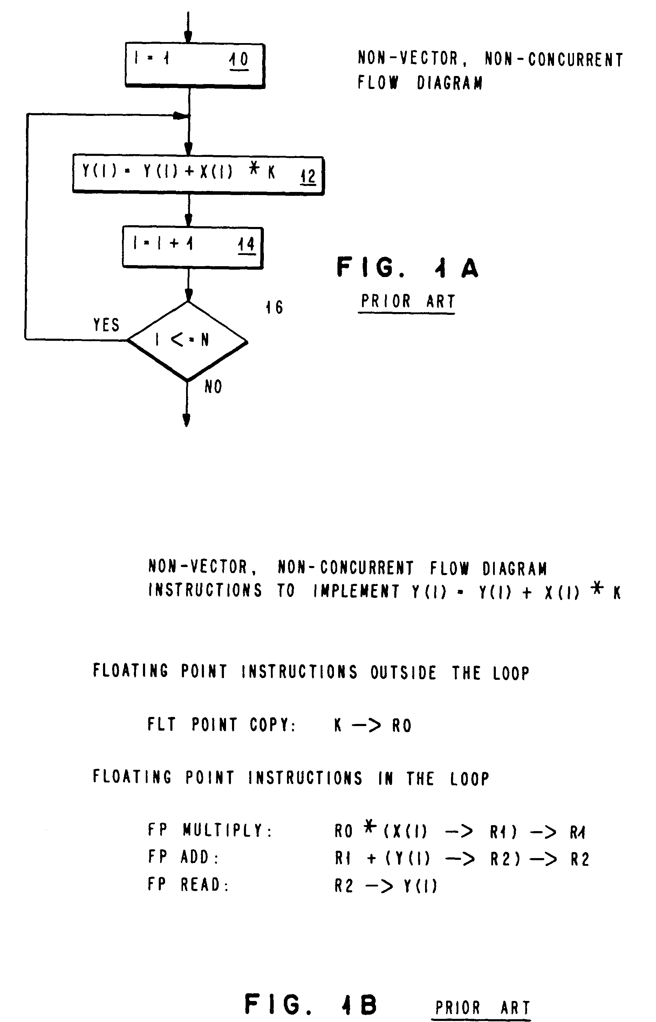

Figure 1A illustrates a simple loop for performing a floating point arithmetic operation as in the prior art. In Step 10, the loop count is set to 1. In Step 12, Y(I) is set equal to Y(I) plus X(I)*K. In Step 14, the loop count I is incremented. In Step 16, a decision is made as to whether or not I is less than some parameter N which denotes the number of the loop computations. If the I count is less than N the process returns to Step 12. If not, the process is exited.

The actual computer operations performed are illustrated as computer instructions in Figure 1B. First the constant K is placed in register zero (R0). Next the floating point multiplication operation is performed where X(I) is placed in register (R1) and R1 is multiplied by R0 with the result placed in R1. The floating point add is performed by placing Y(I) in register two (R2), adding R2 to R1 and placing the result in R2. Finally, the result of the operation is read by storing the content R2 into Y(I).

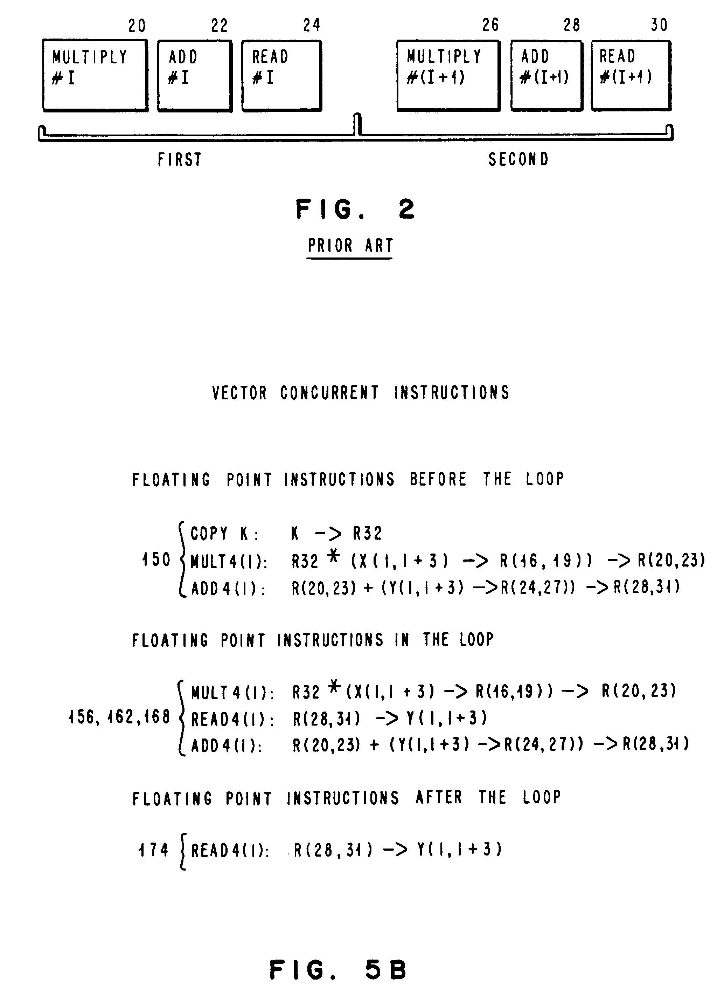

Figure 2 illustrates the traditional prior art timing block diagram having the multiplication operation 20 performed followed by the addition operation 22 and the read operation 24 the loop count I is incremented and the next multiplication operation 26, addition operation 28 and read operation 30 is likewise performed.

Therefore, each of these operations are performed in accordance with their loop count. That is, all operations involving the same parameters (I) occur in consecutive order and the next operands (I+1) are not used until the previous set of operations are finished. In other words, there is no intermixing or overlap of operations between the I operation sequence and the I+1 sequence.

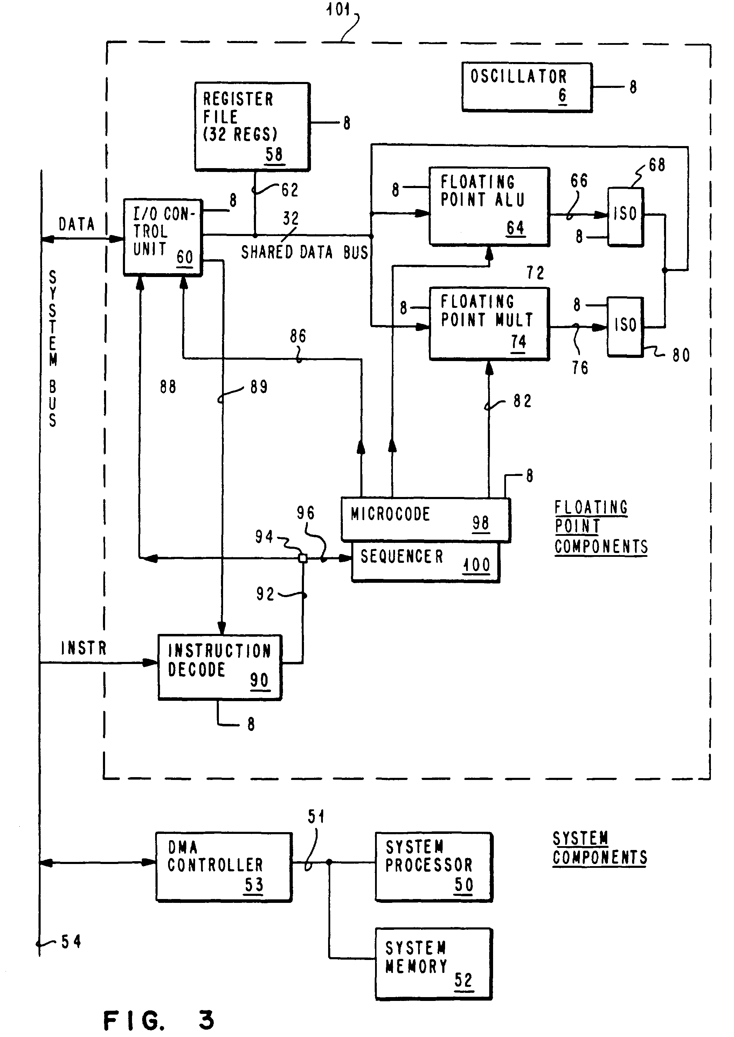

Figure 3 illustrates, in block diagram form, a data processing system including a floating point unit 101 connected by bus 54 to a DMA controller 53 which is, in turn, connected by a bus 51 to system processor 50 and system memory 52. The floating point unit 101 consists of an I/O control unit 60 transfers information between the system processor 50, system memory 52 and the floating point unit 101 over the system bus 54. This data from I/O control unit 60 is provided to the register files 58 and the floating point arithmetic logic unit (ALU) 64 and floating point multiplication unit 74 by bus 62. ALU 64 performs all floating point, integer, and logical operations except for floating point multiply operations. The ALU 64 is configured to be pipelined to handle up to four operations. In other words, in this pipeline mode, assuming a sufficient input work-rate, four operations will be performed concurrently producing one operation result every cycle. Timing is provided by oscillator 6 over line 8.

The multiply unit 74 performs all floating point multiplication and can be pipelined to handle up to two operations in double precision or four operations in single precision at a time. In the single precision mode, multiplier 74 will provide one result every cycle. In the double precision mode a result will be provided every four cycles. The ALU 64 provides an output on bus 66 to a gating element 68. Likewise, the multiplier 74 provides the result on bus 76 to a gating element 80. Gating element 68 and 88 are connected to bus 62 as shown. Register file 58 is used for the storage of both operand parameters as well as result parameters.

The microcode section 98 and sequencer section 100 control the operation of the floating point unit 101. The sequencer 100 provides an address to access the microcode unit 98. The sequencer 100 is connected to the instruction decode unit 90 which receives instructions by a bus 54 from the system processor 50. These instructions are decoded in the instruction decode unit 90 and provided over bus 92 through gate 94 to bus 96 to the sequencer 100 to select a specific section of microcode for execution. The individual bits in the microcode are used to control the I/O unit 60 by a bus 86, the ALU 64 by a bus 81 and the multiplier 74 by bus 82. The instruction decode unit 90 upon receiving instructions from the system bus 54 separates the instructions into 2 categories. The first category is for sequential instructions that must be executed in a specific consecutive order. The second category is for concurrent instructions which can be executed concurrently meaning that the concurrent instruction can overlap the execution of the sequential instruction in progress.

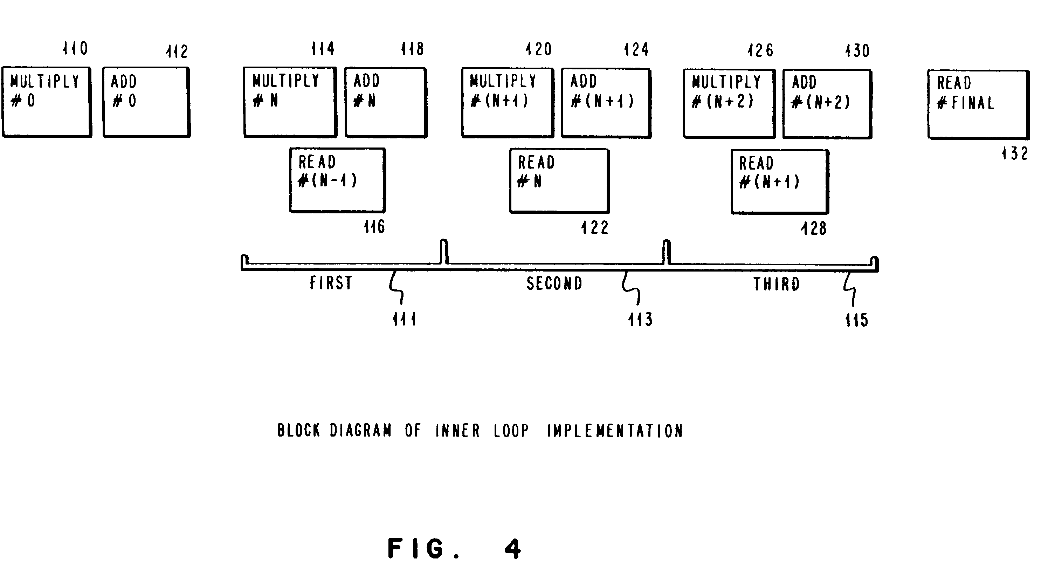

Figure 4 is a timing block diagram illustrating the operation of the arrangement of Fig. 3 in performing a multiple arithmetic sequence (similar to that in Figure 1A) in a concurrent fashion. Specifically, the multiplier operation 110 and addition operation 112 are performed in a consecutive matter. Next the multiplier operation 114 and addition operation 118 are performed concurrently with the read operation 116. This concurrent operation sequence continues until the last multiplication and addition operations have been completed, and the final read operation 132 is performed. In the preferred in embodiment, each block illustrates the computation of a vector operation including four separate arithmetic operations. The bracketed sections 111, 113, and 115 illustrate a loop of operations that is repeated until the final vector multiply and add operations are completed. Therefore, in this preferred embodiment the read operation 132 provides four results.

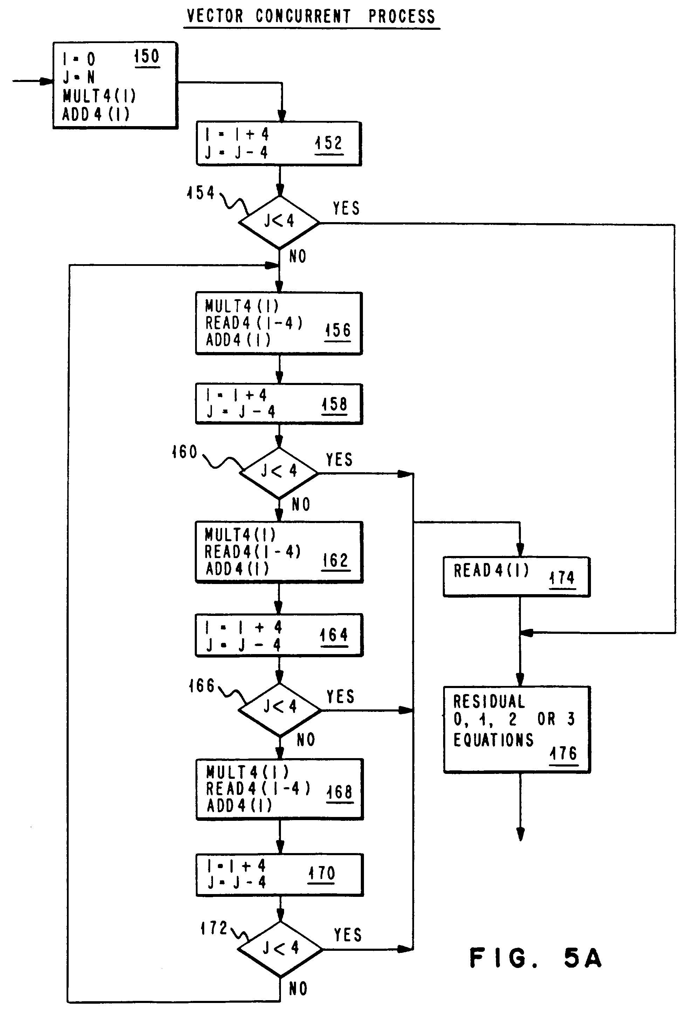

In this preferred embodiment, the vector concurrent process is illustrated in flow chart form in Figure 5A. In Step 150, the array index I is initialised. J which indicates the number of elements in the array on which the computation is to be performed is initialised to end. The constant K is stored in a register and the first four multiplication and addition operations are performed. In other words, the vector operations performs four overlapped multiply and addition operations where the first four elements of X are multiplied by the constant K and then added to the first four elements of the array Y. The results from each of these four operations are than placed in respective registers. In Step 152, the array index is incremented by four so that the computations on the next four elements of X and Y can proceed. J is decremented by four since the computation by four elements of X and Y have been completed. In Step 154, if the number of elements left is less than four the process proceeds to Step 156. If not, the process proceeds to Step 156.

In Step 156, four multiplication operations and four additions operations are performed consecutively. Each of the four is computed in a pipeline fashion concurrently with the reading of the previous operation results. In Step 158, the I and J counters are incremented as shown. In Step 160, if J is less than 4, the process proceeds to Step 174. If not, the process step proceeds to 162 to perform the vector arithmetic operations concurrently with the read operations. In Step 164, I and J are incremented as shown. The decision Step 166 is similar to decision Step 160. Again, in Step 168 the read operations are performed concurrently with the vector arithmetic. In Step 170, I and J are incremented and in decision Step 172, the process either loops back to Step 156 or exits to Step 174 as shown. In Step 174, the results of the previous operations are read. In Step 176, any remaining operations (remaining being less than the loop count of four) are performed in a serial fashion. While the loop in Figure 5A, Steps 162, 166, 168, 170 and 172, are repetitive and could be reduced, the expansion was provided in the preferred embodiment to reduce loop branching and thus execution time.

In Figure 5B, the computer instructions are illustrated in Step 150, the constant K is provided to register thirty-two (R32). The vector multiply and the vector add operations are performed using the registers as shown. Likewise, Step 156, 162, and 168 include instructions as illustrated. Lastly, Step 174 includes the read of the last performed vector multiply and add operations.

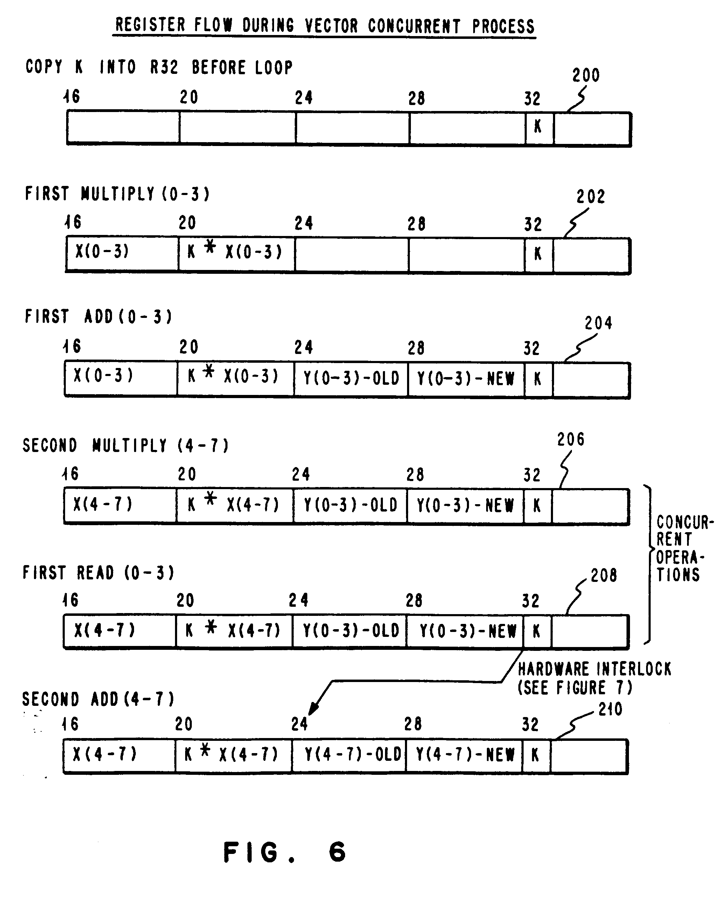

Figure 6 illustrates the flow of data into and out of the registers sixteen through thirty-two (R15 - R32) during the vector arithmetic and read operations. Initially, the constant K is placed in R32 (instance 200). In register set 202, the four X values are placed in R16 - R19 and the result of the computation of X times K is placed in R20 - R23. In instance 204, the original Y values are placed in R24 - R27 and the newly computed Y values are placed in R28 - R31. In instance 206, the next four X values are placed in R16 - R19 and the result of the first multiplication of the constant and the next X values are placed in R20 - R23. Note that R24 - R27 still contain the results from the previous sequence. In instance 208, the contents of R28 - R31 containing the Y parameters are read, in other words, they are output from the register file 58 (Figure 3) to the system bus 54. This is done concurrently with the second multiply operation illustrated as instance 206. The second vector add operation is then performed resulting in the old Y values stored in R24 - R27 being used to compute the new Y values which are stored in R28 - R31. The instances 208 and 210 also illustrate a hardware interlock feature that is provided to prevent the storage of new data in R28 - R31 until the read of the previous data in these registers has been completed.

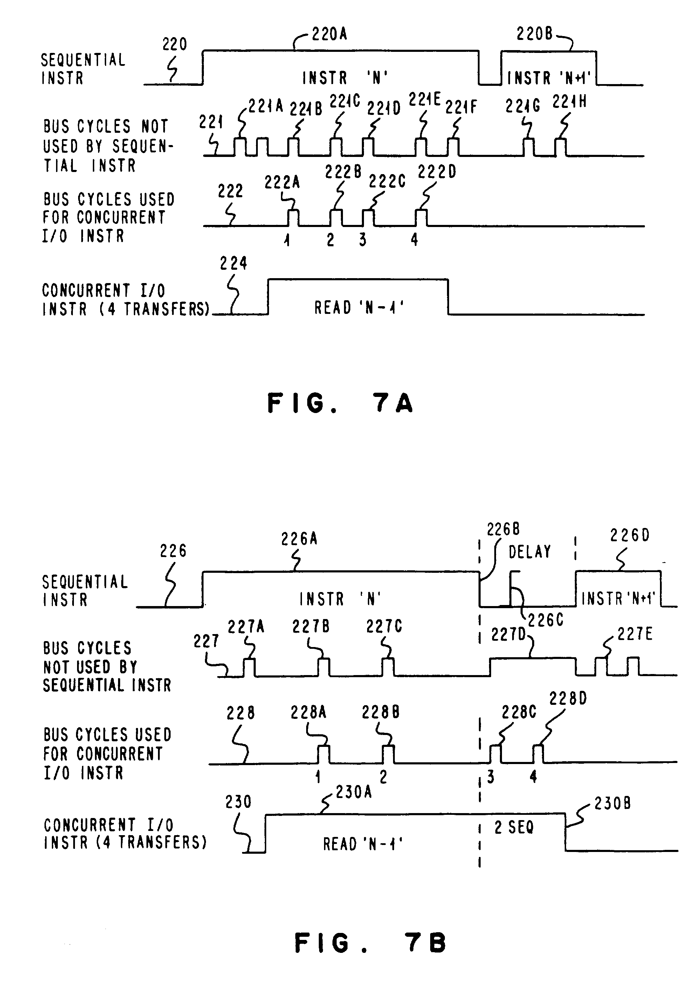

Figures 7A and 7B illustrates timing diagrams for the concurrent operations and the concurrent operations including an interlock. In Figure 7A, line 220 represents the time intervals during which the Nth sequential instruction 220A and the N+1 sequential instruction 220B occurs. This waveform is provided by sequencer 100 to the I/O control unit 60 via line 86. During the start of instruction execution 220A, sequencer 100 receives a flag and data from the instruction decode unit 90. The appropriate data are provided to the ALU 64 and multiply unit 74 from the register file 58 over bus 62. The cycles of the bus 62 which are not being used by the ALU 64 and multiply unit 74 are illustrated as waveform 221. Cycles 221A to 221F represent bus cycles (for bus 62) which are not required during the execution of instruction N. These cycles are available to the I/O control unit 60 via line 86 from the sequencer 100. In this example, I/O control unit 60 accesses register file 58 during times 222A through 222D to perform the concurrent read operations for instruction N-1 during cycles 221B through 22lE. In this case, the concurrent read instruction for instructor N-1 starts after the execution of sequential instruction begins, but it completes during the execution of instructor N. Since the concurrent read operation, illustrated by waveform 224, completes before the end of the sequential instruction N execution, the execution of the next sequential instruction N+1 can begin as shown.

A contrasting case is shown in Figure 7B. In this case, the Nth sequential instruction 226A is executed as before except there are only three unused bus cycles 227A through 227C available as illustrated on waveform 227. In this example, the I/O control unit 60 starts the first concurrent read operation time 228A (waveform 228). However, since four bus cycles are required and only two concurrent read operations 228A and 228B can be completed before instruction N (226A) execution is completed, the remaining two operations 228C and 228D must be performed after the execution of instruction N is complete (time 226B). At this time, all bus cycles are available (period 227D) and the I/O control unit 60 delays or interlocks the start of the next instruction N+1 execution by asserting waveform 230A over bus 89 to instruction decode unit 92 preventing the next instruction data and flag information from being sent to the sequencer 100. At time 230B, the I/O control unit 60 relinquishes the bus 62 and the next sequential instruction N+1 begins execution (226D). This interlock is necessary because independent instruction N+1 uses the same registers (see Figure 6) as the concurrent read instruction. If this interlock were not present, then it would be possible for the new data to be placed into R24-31 before the previous results have been read by the system, thereby causing data loss.

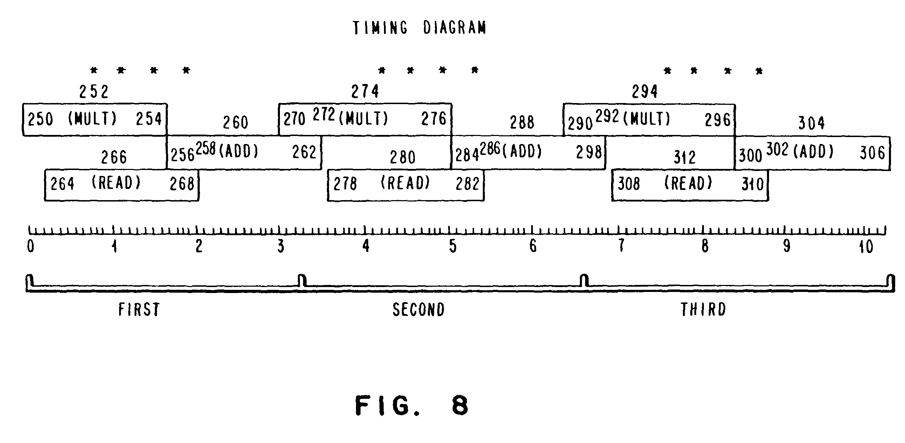

Figure 8 is a timing diagram illustrating the operation of the loop Figure 5A (during the first, second, and third phases of the loop). At time 252 a multiply operation is performed. This starts at time 250 and ends at time 254 as shown. In a consecutive manner, at time 256 the add operation is performed which ends at time 262. Note that the multiply operation 274 is overlapping the completion of the add operation by starting at time 270. Concurrently with the performance of the multiply operation 252 and the queuing of the add operation 260, the read operation 266 is performed. This read operations is reading the result in R28 - R31 of one of the previous multiplied and add operations. The concurrent read is performed in the matter illustrated for each next consecutive multiplier/add computation. It should be understood that each of the multiply and add operation illustrated in Figure 8 are the vector multiply and add operations including four individual multiply operations performed in a pipeline fashion consecutively with the four vector arithmetic addition operation performed in a pipeline fashion. Therefore, each read operation is providing the content of the four registers to the system bus 54. (Figure 3).

It is also envisioned that the I/O unit 60 can provide both read and write operations to register file 58 concurrently with add operations in ALU 64 and the multiply operations in the multiplication unit 74. This would be possible by using a dual ported access memory and providing operand parameters into the registers file 58 in similar way to the previously defined concurrent read operation while accessing write information through the second port.

## Claims

1. A data processing system for performing a series of operation sequences, the data processing system comprising a set of registers (58), a functional logic unit (64, 74), and control means (60, 90, 98, 100) for entering data and reading data from the set of registers (58), the functional logic unit (64, 74) being arranged to compute results consecutively for each of the operation sequences in the series, and storing results from each operation sequence in the set of registers (58); the data processing system being connectable to a system bus (54), and each invoked sequence of operations having the same logical form
the system being characterised in that:
each register in the set (58) is assigned to store either parameters for an operation sequence, intermediate results of operations in the sequence, or a final operation sequence result;
the set of registers (58) is arranged such that the parameters and results of a current operation sequence replace the parameters and results stored in the registers for a preceding operation sequence;
the control means (60, 90, 98, 100) being arranged such that, during computation of the results for a current operation sequence, the control means (60, 90, 98, 100) performs an I/O operation by which the final results of a preceding operation sequence are read from their assigned registers, and are output on to said system bus (54).

2. A system as claimed in Claim 1, further characterised in that the control means (60) is arranged to store parameters for a next operation sequence in the assigned registers of said set (58) during the computation of the results for the current operation sequence.

3. A system as claimed in Claim 1 or Claim 2, wherein each operation sequence includes a plurality of arithmetic operations that are identical for the operation sequences of said series.

4. A system as claimed in any of Claims 1 to 3, wherein said functional logic unit (64, 74) includes means for pipeline computing said results for a plurality of operations in the operation sequence.

5. A system as claimed in any preceding claim wherein said control means (60) includes means for preventing the functional logic unit (64, 74) from accessing the register to store the final results of the current operation sequence until the final results from the preceding operation sequence have been read.

6. A system as claimed in any preceding claim, in the form of a limited function arithmetic unit slaved to, or adapted to be slaved to a general purpose processor.

7. A method of performing a series of operation sequences in a data processing system connected to a system bus (54) and comprising a set of registers (58) and a functional logic unit (64, 74), each invoked sequence of operations having the same logical form, said method comprising the steps of:
employing the functional logic unit (64, 74) to compute results consecutively for each of the operation sequences in the series;
storing results from each operation sequence in the set of registers (58);
the method being characterised by the steps of:
assigning each register in the set (58) to store either parameters for an operation sequence, intermediate results of operations in the sequence, or a final operation sequence result;
arranging the set of registers (58) such that the parameters and results of a current operation sequence replace the parameters and results stored in the registers for a preceding operation sequence;
during computation of the results for a current operation sequence, performing an I/O operation by which the final results of a preceding operation sequence are read from their assigned registers, and are output onto said system bus (54).

8. A method as claimed in Claim 7, further comprising the step of storing parameters for a next operation sequence in the assigned registers of said set (58) during the computation of the results for the current operation sequence.

9. A method as claimed in Claim 7 or Claim 8, wherein each operation sequence includes a plurality of arithmetic operations that are identical for the operation sequences of said series and each operation result is stored in said storing step in a unique one of said registers during the computation of the sequence.

10. A method as claimed in any of Claims 7 to 9, wherein said step of computing results includes pipeline computing said results for a plurality of operations in the operation sequence.

11. A method as claimed in any of Claims 7 to 10, wherein said reading step includes the step of preventing the functional logic unit (64, 74) from accessing the register to store the final results of the current operation sequence until the final results from the preceding operation sequence have been read.

## Patentansprüche

1. Ein Datenverarbeitungssystem zur Durchführung einer Reihe von Operationssequenzen, wobei das Datenverarbeitungssystem einen Satz Register (58), eine zweckmäßige Logikeinheit (64, 74) und ein Steuermittel (60, 90, 98, 100) zur Eingabe von Daten und zum Lesen von Daten aus dem Registersatz (58) beinhaltet, wobei die zweckmäßige Logikeinheit (64, 74) so eingerichtet ist, daß sie Ergebnisse konsekutiv für jede Operationssequenz der Reihe berechnet, und die Ergebnisse jeder Operationssequenz im Registersatz (58) abspeichert; das Datenverarbeitungssystem an einen Systembus (54) anschließbar ist, und jede aufgerufene Operationssequenz die gleiche logische Form aufweist, wobei das System dadurch gekennzeichnet ist, daß
jedem Register im Satz (58) entweder Parameter für eine Operationssequenz, Zwischenresultate der Operationen in der Sequenz, oder ein Operationssequenz-Endergebnis zum Abspeichern zugewiesen wird;
der Registersatz (58) so eingerichtet ist, daß die Parameter und Ergebnisse einer augenblicklichen Operationssequenz die in den Registern abgespeicherten Parameter und Ergebnisse einer vorhergehenden Operationssequenz ersetzen;
das Steuermittel (60, 90, 98, 100) so eingerichtet ist, daß während der Berechnung der Ergebnisse einer augenblicklichen Operationssequenz das Steuermittel (60, 90, 98, 100) eine E/A-Operation durchführt, durch die die Endergebnisse einer vorhergehenden Operationssequenz aus den ihnen zugeordneten Registern ausgelesen und auf den Systembus (54) gelegt werden.

2. Ein System gemäß Anspruch 1, ferner dadurch gekennzeichnet, daß das Steuermittel (60) so ausgelegt ist, daß es während der Berechnung der Ergebnisse für die derzeitige Operationssequenz Parameter für die nächste Operationssequenz in den zugewiesenen Registern des Satzes (58) abspeichert.

3. Ein System gemäß Anspruch 1 oder 2, in dem jede Operationssequenz eine Vielzahl von arithmetischen Operationen beinhaltet, die für die Operationssequenzen dieser Reihe identisch sind.

4. Ein System gemäß einem beliebigen der Ansprüche 1 bis 3, in dem die zweckmäßige Logikeinheit (64, 74) Mittel zur Fließbandberechnung dieser Ergebnisse für eine Vielzahl von Operationen in der Operationssequenz beinhaltet.

5. Ein System gemäß einem beliebigen vorstehenden Anspruch, in dem das Steuermittel (60) Mittel beinhaltet, die verhindern, daß die zweckmäßige Logikeinheit (64, 74) zum Abspeichern der Endergebnisse der augenblicklichen Operationssequenz auf das Register zugreifen kann, bevor die Endergebnisse aus der vorhergehenden Operationssequenz gelesen sind.

6. Ein System gemäß einem beliebigen vorstehenden Anspruch in der Form einer Funktionsarithmetikeinheit, die von einem NC-Prozessor abhängig ist oder abhängig gemacht werden kann.

7. Ein Verfahren zur Durchführung einer Reihe von Operationssequenzen in einem Datenverarbeitungssystem, das an einen Systembus (54) angeschlossen ist und einen Registersatz (58) und eine zweckmäßige Logikeinheit (64, 74) aufweist, wobei jede aufgerufene Operationssequenz die gleiche logische Form aufweist, und wobei dieses Verfahren die folgenden Schritte umfaßt:
Anwenden der zweckmäßigen Logikeinheit (64, 74) zur konsekutiven Berechnung der Ergebnisse für jede der Operationssequenzen der Reihe;
Abspeichern der Ergebnisse aus jeder Operationssequenz im Registersatz (58);
wobei das Verfahren durch die folgenden Schritte gekennzeichnet ist:
Anweisen jedes Registers im Satz (58), entweder Parameter für eine Operationssequenz, Zwischenresultate der Operationen in der Sequenz, oder ein Operationssequenz-Endergebnis abzuspeichern;
Einrichten des Registersatzes (58) so, daß die Parameter und Ergebnisse einer augenblicklichen Operationssequenz die in den Registern abgespeicherten Parameter und Ergebnisse einer vorhergehenden Operationssequenz ersetzen;
Durchführen einer E/A-Operation während der Berechnung der Ergebnisse einer augenblicklich ablaufenden Operationssequenz, durch die die Endergebnisse einer vorhergehenden Operation aus den ihnen zugewiesenen Registern ausgelesen und auf den Systembus (54) gelegt werden.

8. Ein Verfahren gemäß Anspruch 7, das ferner den Schritt des Abspeicherns von Parametern für eine nächste Operationssequenz in den zugewiesenen Registern des Satzes (58) während der Berechnung der Ergebnisse für die augenblicklich ablaufende Operationssequenz umfaßt.

9. Ein Verfahren gemäß Anspruch 7 oder 8, in dem jede Operationssequenz eine Vielzahl von arithmetischen Operationen umfaßt, die für die Operationssequenzen der Reihe identisch sind, und jedes Operationsergebnis im Abspeicherschritt während der Berechnung der Sequenz in einem einmaligen Register abgespeichert wird.

10. Ein Verfahren gemäß einem beliebigen der Ansprüche 7 bis 9, in dem der Schritt des Berechnens der Ergebnisse die Fließbandberechnung dieser Ergebnisse für eine Vielzahl von Operationen in der Operationssequenz beinhaltet.

11. Ein Verfahren gemäß einem beliebigen der Ansprüche 7 bis 10, in dem der Schritt des Lesens den Schritt beinhaltet, wonach verhindert wird, daß die zweckmäßige Logikeinheit (64, 74) auf das Register zum Abspeichern des Endergebnisses der augenblicklichen Operationssequenz zugreift, bevor die Endergebnisse der vorangehenden Operationssequenz gelesen sind.

## Revendications

1. Système de traitement de données pour effectuer une série de séquences d'opérations, le système de traitement de données comprenant une série de registres (58), une unité logique fonctionnelle (64, 74) et un moyen de commande (60, 90, 98, 100) pour l'introduction de données et la lecture de données à partir de la série de registres (58), l'unité logique fonctionnelle (64, 74) étant agencée pour calculer des résultats consécutivement pour chacune des séquences d'opérations dans la série, et stockant les résultats de chaque séquence d'opérations dans la série de registres (58); le système de traitement de données pouvant être connecté à un bus de système (54), et chaque séquence d'opérations invoquée ayant la même forme logique, le système étant caractérisé en ce que:
chaque registre dans la série (58) est assigné pour stocker soit des paramètres pour une séquence d'opérations, des résultats intermédiaires d'opérations dans la séquence, ou un résultat final d'une séquence d'opérations;
la série de registres (58) est agencée de telle sorte que les paramètres et les résultats d'une séquence d'opérations en cours remplacent les paramètres et les résultats stockés dans les registres pour une séquence d'opérations précédente;
le moyen de commande (60, 90, 98, 100) est agencé de telle sorte que, au cours du calcul des résultats pour une séquence d'opérations en cours, le moyen de commande (60, 90, 98, 100) effectue une opération d'E/S par laquelle les résultats finaux d'une séquence d'opérations précédente sont lus à partir de leurs registres assignés et sont délivrés sur ledit bus de système (54).

2. Système selon la revendication 1, caractérisé en outre en ce que le moyen de commande (60) est agencé pour stocker des paramètres pour une séquence d'opérations suivante dans les registres assignés de ladite série (58) au cours du calcul des résultats de la séquence d'opérations en cours.

3. Système selon la revendication 1 ou la revendication 2, dans lequel chaque séquence d'opérations comporte une pluralité d'opérations arithmétiques qui sont identiques pour les séquences d'opérations de ladite série.

4. Système selon l'une quelconque des revendications 1 à 3, dans lequel ladite unité logique fonctionnelle (64, 74) comporte un moyen pour le calcul en pipeline desdits résultats pour une pluralité d'opérations dans la séquence d'opérations.

5. Système selon l'une quelconque des revendications précédentes dans lequel ledit moyen de commande (60) comporte un moyen por empêcher l'unité logique fonctionnelle (64, 74) d'accéder au registre pour stocker les résultats finaux de la séquence d'opérations en cours jusqu'à ce que les résultats finaux de la séquence d'opérations précédente aient été lus.

6. Système selon l'une quelconque des revendications précédentes, se présentant sous la forme d'une unité arithmétique à fonction limitée asservie à, ou apte à être asservie à un processeur universel.

7. Procédé pour effectuer une série de séquences d'opérations dans un système de traitement de données connecté à un bus de système (54) et comprenant une série de registres (58) et une unité logique fonctionnelle (64, 74) chaque séquence invoquée d'opérations ayant la même forme logique, ledit procédé comprenant les étapes suivantes:
utilisation de l'unité logique fonctionnelle (64, 74) pour calculer les résultats consécutivement pour chaque séquence d'opérations dans la série;
stockage des résultats de chaque séquence d'opérations dans la série de registres (58);
le procédé étant caractérisé par les étapes suivantes:
assignation de chaque registre dans la série (58) pour stocker soit des paramètres pour une séquence d'opérations, des résultats intermédiaires d'opérations dans la séquence, ou un résultat de séquence d'opérations finales;
agencement de la série de registres (58) de telle sorte que les paramètres et les résultats d'une séquence d'opérations en cours remplacent les paramètres et les résultats stockés dans les registres pour une séquence d'opérations précédente;
au cours du calcul des résultats d'une séquence d'opérations en cours, réalisation d'une opération d'E/S par laquelle les résultats finaux d'une séquence d'opérations précédente sont lus à partir de leurs registres assignés et sont délivrés sur ledit bus de système (54).

8. Procédé selon la revendication 7, comprenant en outre l'étape de stockage de paramètres pourune séquence d'opérations suivante dans les registres assignés de ladite série (58) au cours du calcul des résultats de la séquence d'opérations en cours.

9. Procédé selon la revendication 7 ou la revendication 8, dans lequel chaque séquence d'opérations comporte une pluralité d'opérations arithmétiques qui sont identiques pour les séquences d'opérations de ladite série et chaque résultat d'opération est stocké dans ladite étape de stockage dans un registre unique desdits registres au cours du calcul de la séquence.

10. Procédé selon l'une quelconque des revendications 7 à 9, dans lequel ladite étape de calcul des résultats comporte le calcul en pipeline desdits résultats pour une pluralité d'opérations dans la séquence d'opérations.

11. Procédé selon l'une quelconque des revendications 7 à 10, dans lequel ladite étape de lecture comporte l'étape d'empêcher l'unité logique fonctionnelle (64, 74) d'accéder au registre pour stocker les résultats finaux de la séquence d'opérations en cours jusqu'à ce que les résultats finaux de la séquence d'opérations précédente aient été lus.
